# EUROPEAN PATENT APPLICATION

(11) **EP 1 445 220 A2**
(43) Date of publication of application: **11.08.2004**
(21) Application number: 04075370.9
(22) Date of filing: 05.02.2004
(51) Int. Cl.: B65G 59/04, B65G 57/04

(54) **Method and device for removing objects from a carrier layer by layer**

(30) Priority: 07.02.2003 NL 1022628
(71) Applicant: CSi Industries B.V., 4941 VL Raamsdonksveer (NL)
(72) Inventor: Klundert, Mark van de, 4941 VL Raamsdonksveer (NL)
(74) Representative: Brookhuis, Hendrik Jan Arnold

(57) **Abstract**

The invention describes a method for removing, layer by layer, objects which are stacked in a plurality of layers on a first carrier, such as a pallet, comprising the following steps: moving a gripper member and the first carrier towards one another in a substantially vertical direction, using the gripper member to take hold of at least a top layer of objects, moving the gripper member and the first carrier away from one another in a substantially vertical direction, using the gripper member to place the objects onto a second carrier, and removing the objects from the second carrier. The second carrier is positioned above the first carrier, which has remained in its position beneath the gripper member, together with any layers of objects which are still present thereon, and beneath the objects in the gripper member, so that the second carrier is positioned between the first carrier and the gripper member.

## Description

The present invention relates to a method for removing, layer by layer, objects which are stacked in a plurality of layers on a first carrier, such as a pallet, comprising the following steps: moving a gripper member and the first carrier towards one another in a substantially vertical direction, using the gripper member to take hold of at least a top layer of objects, moving the gripper member and the first carrier away from one another in a substantially vertical direction, using the gripper member to place the objects onto a second carrier, and removing the objects from the second carrier.

Furthermore, the present application relates to a device for carrying out the method in accordance with the present invention.

A method of this type is known from German patent publication DE-A1-3 117 396.

In the known method, first of all a loaded pallet is positioned on a bench, which can move to and fro at ground level, directly beneath a gripper member. The gripper member can be displaced in the vertical direction and is designed to grip a top layer of objects on the pallet when the pallet is located directly below the gripper member. After the gripper member has taken hold of the layer of objects which is to be removed, the gripper member is moved upwards, so that the moveable bench and the pallet which is present thereon can be displaced laterally. The moveable bench is displaced until a flat plate mounted on the bench is situated directly beneath the gripper member. The gripper member is then moved downwards and the objects in the gripper member are placed onto the planar plate.

The objects are pushed by means of a displacement mechanism of the planar plate and moved onwards to a conveyor, which is likewise located at ground level and conveys the objects onwards, for example to a sorting device.

However, the known method has a number of drawbacks.

A first drawback of the known method is that the gripper member together with the objects which are present therein has to cover a considerable distance in order ultimately to place the objects onto the planar plate. This increases the risk of damage to objects which unintentionally drop out of the gripper member. Moreover, the considerable distance which the gripper member has to cover means that the objects remain in the gripper member for a considerable time, which further increases the risk of the objects being dropped.

A further drawback is that the capacity of the device which is used to carry out the known method is low. To enable a layer of objects which has been removed to be placed onto the planar plate, it is necessary for the movable bench to be constantly moved to and fro. To achieve a high capacity, high speed and therefore considerable accelerations of the bench and the pallet which is present thereon are required.

It is an object of the present invention to provide a method and a device which eliminate one or more of the above drawbacks or at least provide a successful alternative.

According to the present invention, this object is achieved by a method as described above in which the second carrier is positioned above the first carrier, which has remained in its position beneath the gripper member, together with any layers of objects which are still present thereon, and beneath the objects in the gripper member, so that the second carrier is positioned between the first carrier and the gripper member.

Positioning the second carrier between the layer of objects and the first carrier, after the objects have been picked up by the gripper member, makes it possible to provide a very short distance between the objects in the gripper member and the second carrier and also between the objects in the gripper member and the first carrier. As a result, the displacement of the objects in the gripper member is considerably limited, and the abovementioned risks are virtually eliminated. Moreover, a considerable increase in working speed is achieved, since on the one hand only a slight displacement in the vertical direction is required to create space for the second carrier, and on the other hand since the objects can be transferred from the second carried to a conveyor independently of the gripper member and the first carrier being moved away from one another.

In a preferred embodiment of the method, the second carrier is positioned directly beneath the objects in the gripper member, so that the distance between the second carrier and the objects in the gripper member can be minimized. This further reduces the risk of damage to the objects in the event of them dropping out of the gripper member.

In a further preferred embodiment, the second carrier is held at a fixed vertical position while it is being positioned between the layer of objects in the gripper member and the first carrier, with the second carrier preferably being located at substantially the same height as the conveyor. As a result, the second carrier moves only in a horizontal plane while it is being positioned between the objects in the gripper member and the first carrier, and there is no need for any further displacement of the second carrier in order to transfer the objects to the conveyor, and consequently this can take place with a minimum of movement of the objects.

In a further preferred embodiment of the method, the first carrier, before the second carrier is moved into position, is moved in the vertical direction until it reaches a level which is such that the underside of the layer of objects to be removed is located just above the level of the second carrier. The result of this is that the distance between the objects in the gripper member and the second carrier can be minimized.

In a preferred embodiment, the layer of objects, before it is taken hold of, is clamped by means of edge-retaining means, which prevent lateral movement of the objects and therefore further reduce the risk of the objects being dropped out of the gripper member.

The above and further aspects, characteristics and advantages of the present invention will be explained in more detail with reference to the following description of preferred embodiments of a method and device according to the invention with reference to the drawing, in which identical reference numerals denote identical or similar components and in which:
Figure 1 shows a side view of a device according to the invention;
Figure 2 shows a plan view of the device shown in Figure 1;
Figures 3-13 show various steps in the method according to the invention.

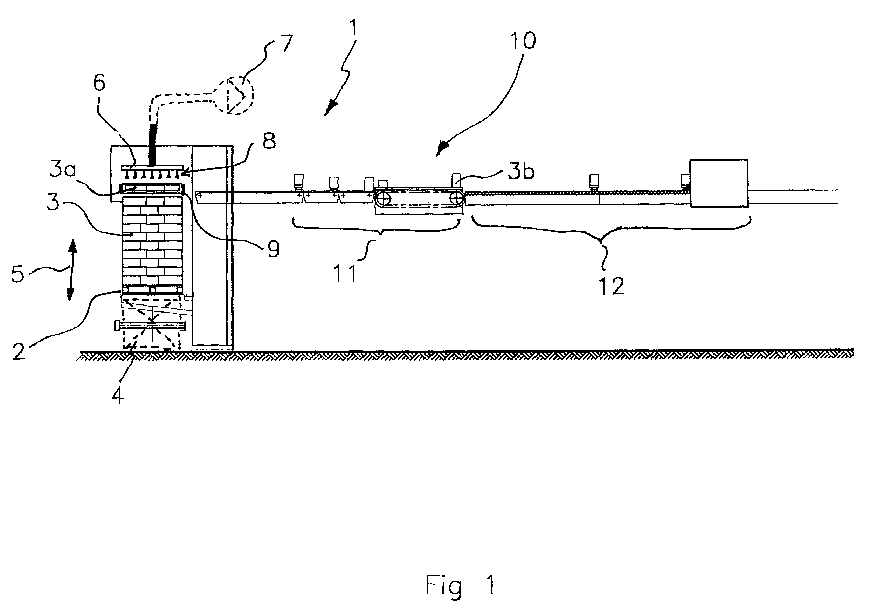

Figure 1 shows a device 1 for removing, layer by layer, objects 3 which are stacked in a plurality of layers on a first carrier 2. The first carrier 2 is, for example, a (wooden) pallet which is in widespread use in practice, but may also be any other suitable carrier. In the text which follows, the first carrier 2 will be referred to throughout as a pallet 2. The pallet 2 is standing on a displacement device 4, which is only depicted highly diagrammatically, in order to simplify the illustration. The displacement device 4 is designed to move the pallet 2 in a substantially vertical direction. This is indicated in the figure by a double arrow 5. The displacement device 4 may, for example, be a lifting device which is provided with hydraulic cylinders for displacing the pallet 2 loaded with objects 3. The displacement device 4 may, for example, also comprise a linkage mechanism.

Furthermore the device 1 comprises a gripper member 6 which can be used to take hold of at least a top layer 3a of objects 3 from the pallet 2. The gripper member 6 is preferably a vacuum suction member. A vacuum suction member of this type is provided with a large number of suction openings 8 which are connected to a vacuum source 7 (only highly diagrammatically illustrated) and which can take hold of the top surface of the objects 3 by suction. The application of a sufficient suction force to the objects 3 allows the gripper member 6 to take strong enough hold of the objects to be certain that the objects will not easily be able to drop out of the gripper member 6 when the latter is moved downwards. This will be explained in more detail in the text which follows in a discussion of the method according to the invention. The gripper member 6 can be moved in a vertical direction by means of a displacement device (not shown in more detail), so that objects of different heights can be processed.

In the state of the device 1 which is shown in the figure, the top layer of objects 3a is located on a second carrier 9, which is located beneath the gripper member 6 and above the pallet 2 and the layers of objects 3 which are still present thereon. In this way, the second carrier 9 is located between the gripper member 6 with the layer of objects 3a and the objects 3 which are still present on the pallet 2.

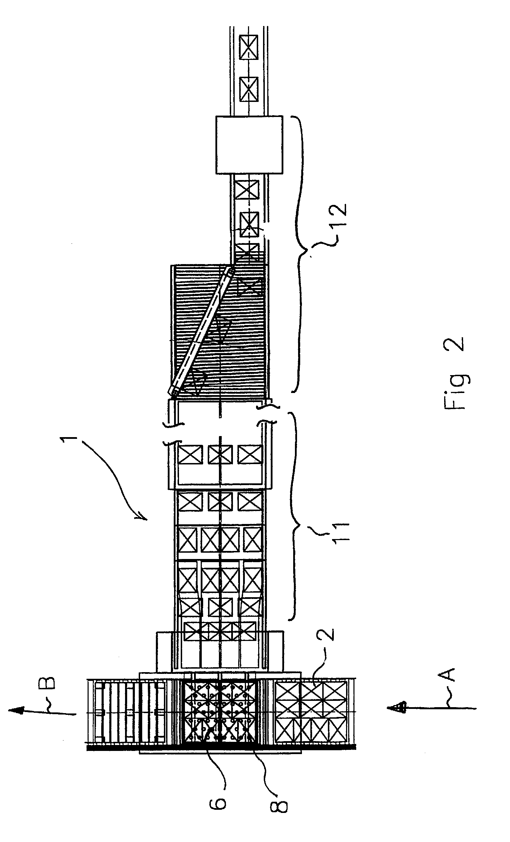

The device 1 also comprises a conveyor, which is denoted overall by 10 and is designed to convey the objects 3a which have been removed from the second carrier 9 onwards to a device 11 for splitting up the layer of objects 3a, with the compact layer of objects 3a being opened up slightly so that the loose objects 3b no longer bear again one another. Downstream of the device 11, the objects 3b are each moved into the same orientation by an orienting device 12. This can be seen more clearly in Figure 2.

Figure 2 shows a plan view of the device 1. From a direction denoted by arrow A, loaded pallets 2 are fed to the device 1. Empty pallets are discharged in a direction denoted by arrow B. It is clear from the figure that the gripper member 6 comprises a large number of uniformly distributed suction openings 8. It can also be seen that the objects 3b which have been removed from the pallet 2 and the second carrier 9 are split up and oriented in the devices 11 and 12, respectively.

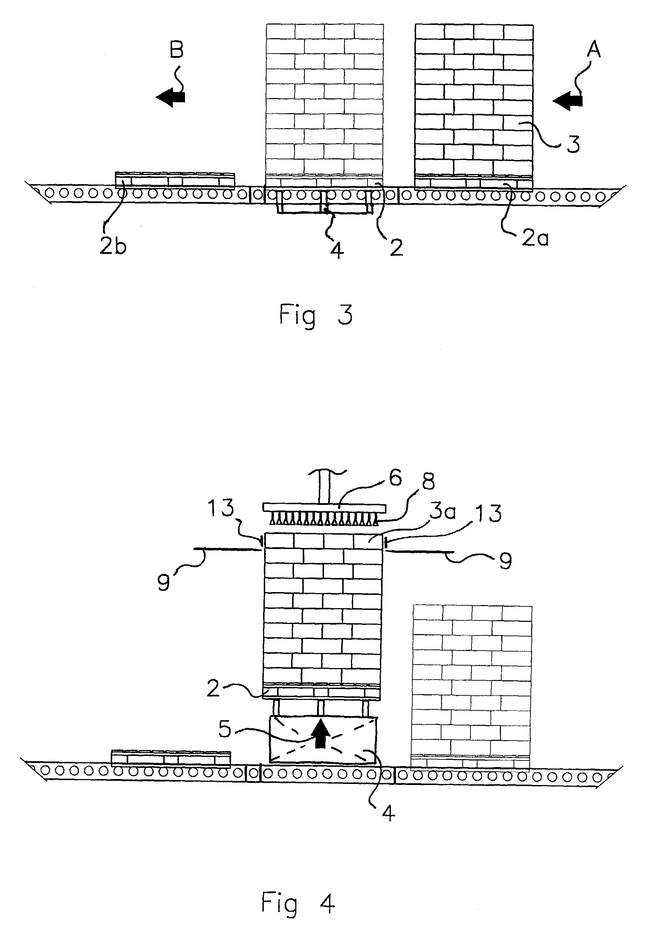

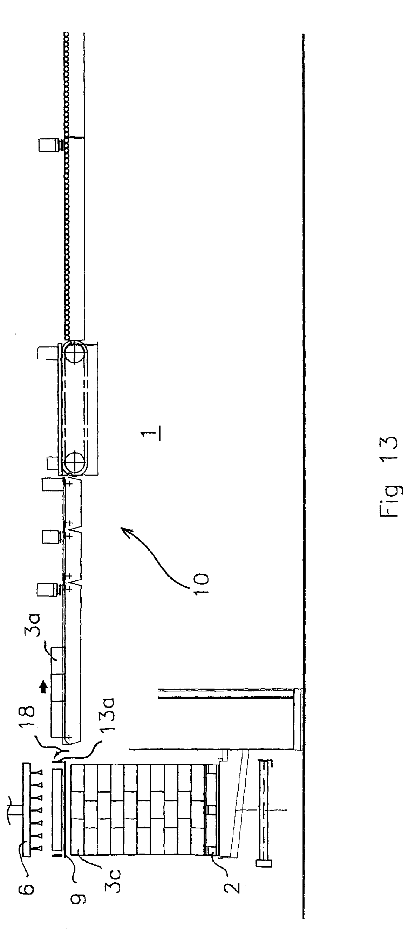

The method for removing, layer by layer, objects which have been stacked in a plurality of layers on a pallet 2 using the device 1 will be explained in more detail in the text which follows with reference to Figures 3-13.

Figure 3 diagrammatically depicts the step of supplying a pallet 2a loaded with a plurality of layers of objects 3 in the direction A and discharging the empty pallet 2b in the direction B. In the intervening position, the pallet 2 is resting on the diagrammatically indicated displacement device 4. From the position shown in Figure 3, the pallet 2 is moved upwards by the displacement device 4, which is illustrated in highly diagrammatic form, in the direction of arrow 5 until it reaches a level which is such that the underside of the layer of objects which is to be removed is located just above the level of the second carrier 9. Edge-retaining means 13 are arranged at the periphery of the layer of objects 3a. The edge-retaining means 13 comprise a plurality of planar plate parts which are designed to clamp the layer of objects 3a in place. The gripper member 6 with the suction openings 8 is located above the layer of objects 3a.

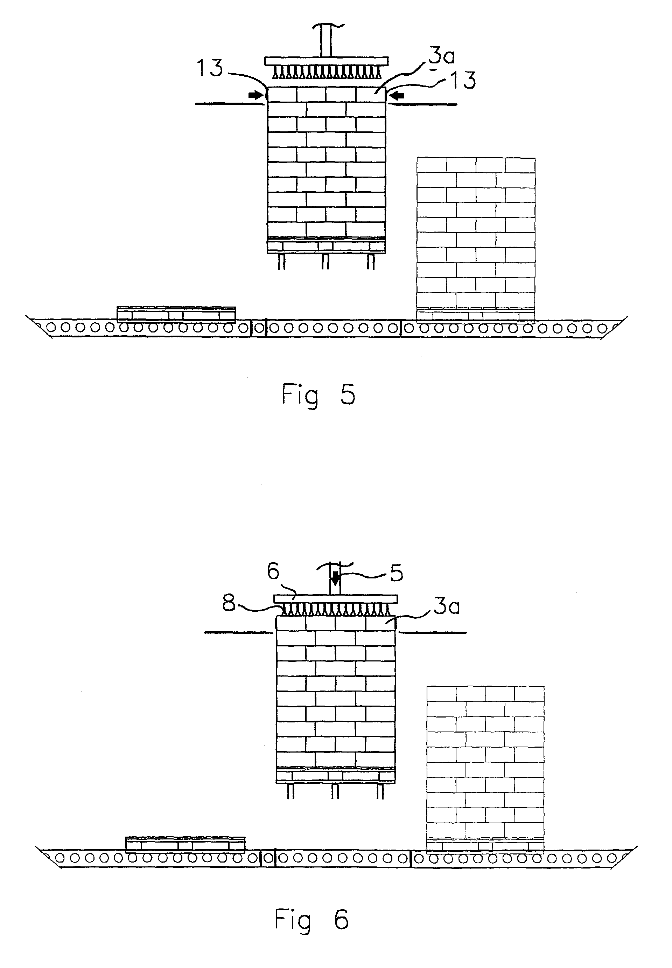

The second carrier 9 preferably comprises two planar plates which are positioned opposite one another and can move in substantially the same place with respect to one another. The planar plates together form a planar, continuous plate. In the case shown, the two planar plates lie opposite one another, just below the edge-retaining means 13. The number of planar plates is not restricted to the number which is shown. The way in which the layer of objects 3a is clamped in place by the edge-retaining means 13 is shown in Figure 5.

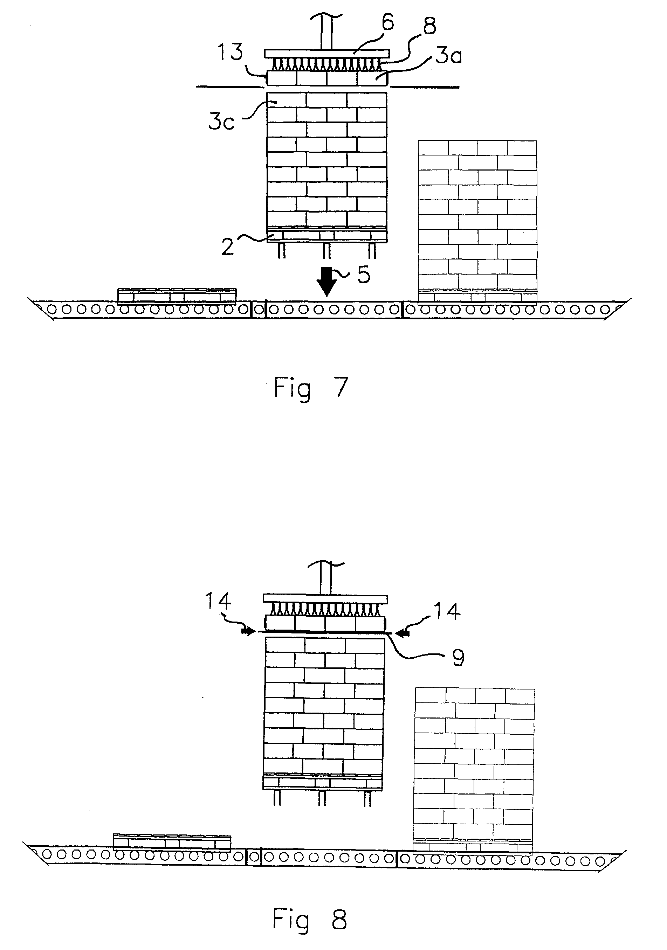

After the layer of objects 3a has been clamped in place, the gripper member 6 is lowered in the direction indicated by arrow 5, as shown in Figure 6. As the gripper member 6 is being moved downwards, the suction openings 8 of the gripper member 6 come into contact with the top surface of the layer of objects 3a and are attached by suction. The layer of objects 3a is now clamped in place between the edge-retaining means 13 and the suction openings 8 of the gripper member 6, and the layer of objects 3a can then be removed from the pallet 2 by the first carrier 2 being lowered. This is shown in Figure 7.

The layer of objects 3a is removed from the pallet 2 as a result of the pallet 2 being moved downwards in the direction indicated by arrow 5. The layer of objects 3a in the gripper member 6 is therefore not moved, and therefore no reactive forces are exerted on the objects 3a.

The lowering of the first carrier 2 produces a space between the underside of the layer of objects 3a in the gripper member 6 and the topside of the next layer of objects 3c down on the pallet 2. This space is preferably kept as small as possible, so that the risk of damage in the event of the objects 3a being dropped out of the gripper member 6 is minimized. The gripper member 6 is held in a fixed position while the pallet 2 is being moved downwards. As a result, the objects 3a in the gripper member 6 will not move or will scarcely move, and the risk of the objects 3a being dropped is minimized.

From the position shown in Figure 7, the second carrier 9 is moved into the abovementioned space as a result of the two opposite planar plates being moved towards one another. This is indicated by arrows 14. While the second carrier 9 is being positioned directly below the layer of objects 3a, it is not necessary for the pallet 2 to be moved further downwards, and consequently the pallet 2 only has to be moved to the minimum possible extent. Positioning the second carrier 9 as immediately beneath the layer of objects 3a as possible, i.e. very closely beneath them, means that the gripper member 6 has to be moved downwards scarcely if at all in order for the objects 3a to be placed onto the second carrier 9.

Before the objects 3a are placed from the gripper member 6 onto the second carrier 9, it is possible to assess whether any objects have dropped out of the gripper member 6, in order to prevent the second carrier 9 from colliding with an object which is lying on the layer of objects 3c beneath the second carrier 9. This can be implemented, for example, with the aid of detection means in the form of optical sensors which are arranged on the second carrier 9, for example on the edge of the second carrier 9. In this context, the fitting of sensors on the second carrier 9 has the advantage that even an object which drops out of the gripper member 6 while the second carrier 9 is being arranged beneath the gripper member 6 can still be detected, and suitable intervention in the movement of the second carrier 9 is then possible.

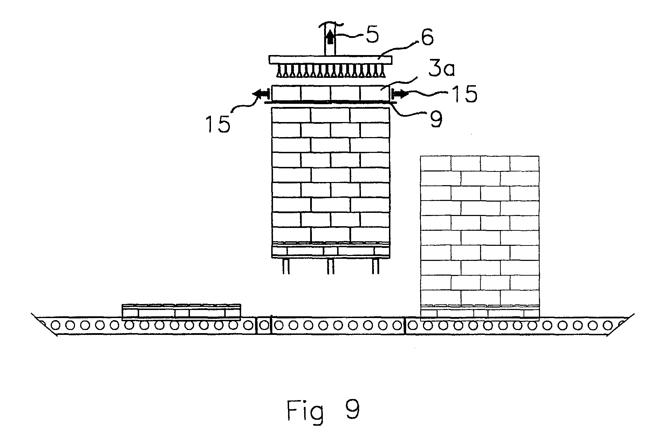

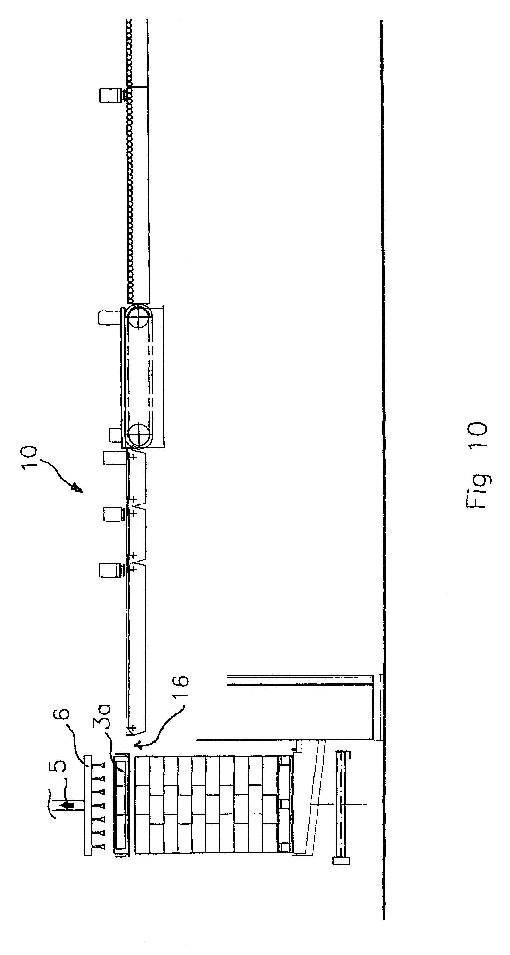

The step of placing the objects 3a onto the second carrier 9 is shown in Figure 9 and Figure 10, with the removal of the edge-retaining means 13 also being shown (arrows 15).

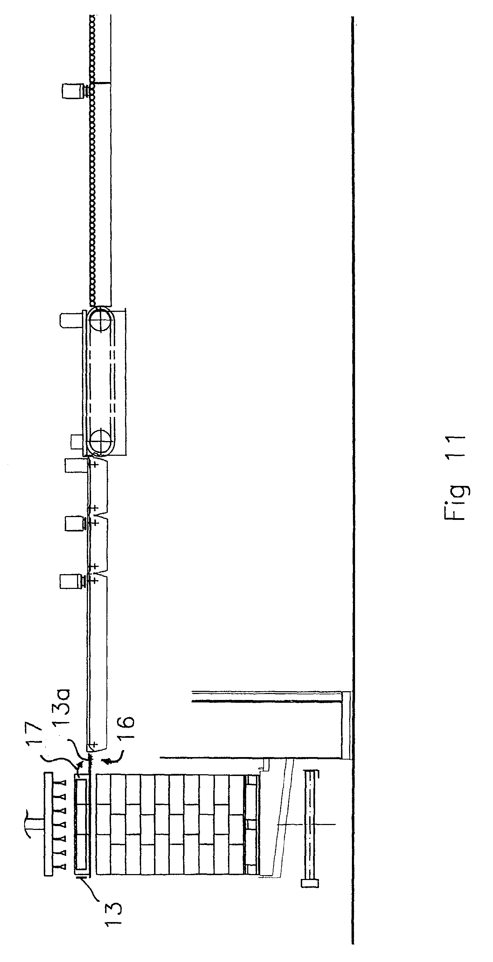

The empty gripper member 6 is moved upwards in order not to impede removal of the layer of objects 3a from the second carrier 9. It is clearly apparent from Figure 10 that the conveyor 10 is at the same height as the second carrier 9. Consequently, it is not necessary to adjust the height of the second carrier 9 in order for the objects 3a to be transferred to the conveyor 10. It can be seen in Figure 10 that there is a gap 16 between the second carrier 9 and the conveyor 10, and this gap has to be bridged during the transfer of the objects 3a to the conveyor 10. To bridge this gap 16, the edge-retaining means 13, and in particular the plate part 13a, are designed to be pivotable. This is indicated in Figure 11 with the aid of arrow 17.

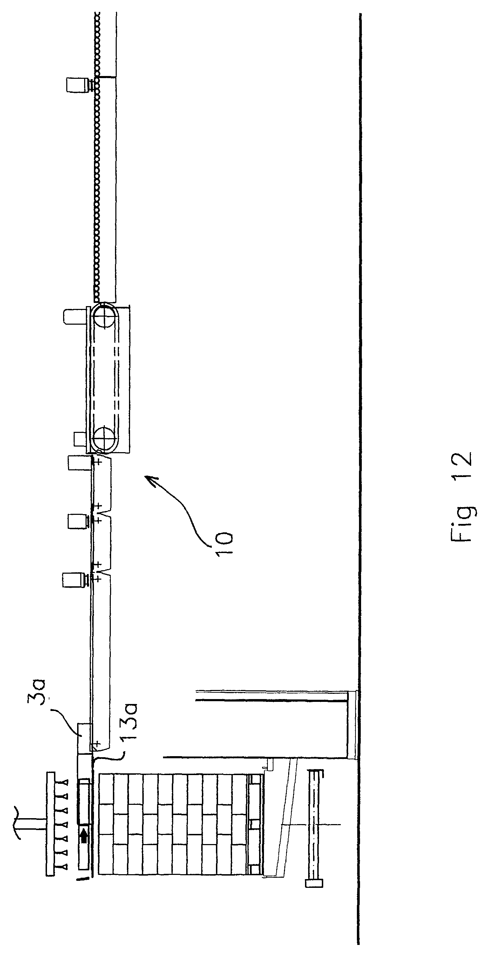

From the position shown in Figure 11, the layer of objects 3a is pushed over the plate part 13a towards the conveyor 10 by a device which is not shown in more detail, for the sake of simplicity of illustration. This operation is shown in Figure 12. As soon as the layer of objects 3a is completely on the conveyor 10, the plate part 13a of the edge-retaining means 13 is folded upwards again, as indicated by arrow 18, and the second carrier 9 is ready to be removed again from beneath the gripper member 6, and the device 1 can be used once again to remove a subsequent layer of objects 3c from the pallet 2.

In the above text, the device 1 has been described in combination with a single conveyor 10. However, it is eminently possible for a plurality of conveyors, extending from one or more of the other sides of the pallet 2, to be employed instead of a single conveyor 10.

The present invention is described on the basis of the removal of objects which are stacked in a plurality of layers on a carrier, in particular a pallet. However, it will be clear that the inventive idea can also be applied to the stacking of objects, which are supplied, for example, by a conveyor, on a carrier.

In the above text, the invention has been described on the basis of the removal of objects from the first carrier 2 to the conveyor 10. In practice, it is sometimes desirable for some of the objects 3 on the first carrier 2 to be transferred to a different pallet or carrier, for example of a different format, so that these objects can be stored and subsequently depalletized.

This can be achieved, for example, by designing the second carrier 9 as a single plate and rather than pushing the objects off the second carrier onto the conveyor 10, temporarily placing the entire second carrier 9 onto the conveyor 10 or elsewhere, then taking a subsequent layer of objects off the first carrier 2, moving the second carrier 9 back under the gripper member 6 and placing the layer of objects in the gripper member 6 onto the layer of objects on the second carrier 9. In this way, it is possible for a plurality of layers of objects to be placed onto the second carrier 9 and for these objects then to be placed onto a further pallet or carrier.

The inventive idea of positioning a second carrier between the gripper member and the first carrier ensures that the distance between the objects in the gripper member and the first carrier is very short. As a result, the displacement of the objects in the gripper member is considerably limited and the risk of the objects being damaged is virtually eliminated. Moreover, a high working speed can also be achieved during loading of a pallet, since on the one hand only slight displacement in the vertical direction is required in order to create space for the second carrier, and on the other hand since the objects can be transferred from the conveyor to the second carrier independently of the movement of the gripper member and the first carrier away from one another.

## Claims

1. Method for removing, layer by layer, objects which are stacked in a plurality of layers on a first carrier, such as a pallet, comprising the following steps:
- moving a gripper member and the first carrier towards one another in a substantially vertical direction;
- using the gripper member to take hold of at least a top layer of objects;
- moving the gripper member and the first carrier away from one another in a substantially vertical direction;
- using the gripper member to place the objects onto a second carrier, and
- removing the objects from the second carrier,
**characterized by**
the step of positioning a second carrier above the first carrier, which has remained in its position beneath the gripper member, together with any layers of objects which are still present thereon, and beneath the objects in the gripper member, so that the second carrier is positioned between the first carrier and the gripper member.

2. Method according to claim 1, **characterized by** the step of positioning the second carrier directly below the objects in the gripper member.

3. Method according to claim 1 or 2, **characterized by** the step of holding the second carrier in a fixed vertical position while it is being positioned between the layer of objects in the gripper member and the first carrier.

4. Method according to claim 3, **characterized by** the step of moving the first carrier in the vertical direction, before the second carrier is moved into position, until the first carrier reaches a level which is such that the underside of the layer of objects to be removed is located just above the level of the second carrier.

5. Method according to one of the preceding claims, **characterized by** the step of transferring the objects from the second carrier to a conveyor, the second carrier being located at substantially the same height as the conveyor.

6. Method according to one of the preceding claims, **characterized by** the step of moving the gripper member towards the objects, before it takes hold of the objects, and then lowering the first carrier, so that space is created in the vicinity of the underside of the objects for the second carrier to be moved into position.

7. Method according to one of the preceding claims, **characterized by** the step of clamping the layer of objects by means of edge-retaining means before the objects are taken hold of.

8. Method according to one of the preceding claims, **characterized by** the step of assessing, before a second carrier is positioned beneath the objects in the gripper member, whether the top layer of objects is completely in the gripper member.

9. Device for removing, layer by layer, objects which are stacked in a plurality of layers on a first carrier, such as a pallet, comprising a displacement device for moving a gripper member and the first carrier substantially in the vertical direction with respect to one another, the gripper member being designed to take hold of at least a top layer of objects, a second, displaceable carrier, onto which the objects in the gripper member can be placed, and means for removing the objects from the second carrier, **characterized in that** the second carrier is designed to be positioned above the first carrier, located beneath the gripper member, together with any layers of objects which are still present thereon, and beneath the objects in the gripper member, in such a manner that the second carrier can be positioned between the first carrier, together with any layers of objects which are still present thereon, and the objects in the gripper member.

10. Device according to claim 9, **characterized in that** the second carrier comprises at least one substantially planar plate which can be positioned between the first carrier and the gripper member from a fixed vertical position.

11. Device according to claim 10, **characterized in that** the second carrier comprises at least two planar plates which can move towards one another, substantially in the same plane, and form a continuous surface after the second carrier has been moved into position.

12. Device according to one of claims 9-11, **characterized in that** the displacement means are designed to move the first carrier in the vertical direction, before the second carrier is moved into position, until the first carrier is at a level which is such that the underside of the layer of objects which is to be removed is positioned just above the level of the second carrier.

13. Device according to one of claims 9-12, **characterized in that** means are provided for transferring the objects from the second carrier to a conveyor.

14. Device according to claim 13, **characterized in that** the second carrier is at substantially the same height as the conveyor.

15. Device according to one of claims 9-14, **characterized in that** edge-retaining means are provided, these means being designed to clamp the layer of objects at the periphery thereof.

16. Device according to one of claims 9-15, **characterized in that** there are detection means which are designed to assess, before a second carrier is moved into position beneath the objects in the gripper member, whether the top layer of objects is entirely in the gripper member.
